# EUROPEAN PATENT SPECIFICATION

(11) **EP 0 687 406 B1**
(45) Date of publication and mention of the grant of the patent: **19.12.2001**
(21) Application number: 95201528.7
(22) Date of filing: 09.06.1995
(51) Int. Cl.: A01C 7/08

(54) **A sowing machine**
Sämaschine
Semoir

(30) Priority: 13.06.1994 NL 9400952
(43) Date of publication of application: 20.12.1995
(73) Proprietor: MAASLAND N.V., 3155 PD Maasland (NL)
(72) Inventor: Beije, Marinus, NL-2991 BV Barendrecht (NL); Bom, Cornelis Johannes Gerardus, NL-3181 VC Rozenburg (NL); Brabander, Adrianus Petrus Maria, NL-2295 LL Kwintsheul (NL)
(74) Representative: Corten, Maurice Jean F.M.

(56) References cited:
- EP-A- 0 309 608
- EP-A- 0 328 858

## Description

The present invention relates to a sowing machine comprising a hopper, from which via a predominantly drum-shaped distributor member with a supply tube and discharge channels, seed can be distributed into a plurality of seed flows, the distributor member including intervention means for intervening in a seed flow, and control means acting on said intervention means, the control means comprising a central adjusting element and a control body positioned intermediary between the adjusting element and the intervention means, the control body being predominantly ring-shaped and arranged to be capable of motion.

Such a machine is known from European Patent Application No. 0 328 858. The known machine has for an advantage that intervening in the seedflow in several outlets of the distributing head may be accomplished simultaneously through the use of a control body to which the intervention means for several outlets are pivotably connected, and on which only a single adjusting element acts. The machine has, however, for a disadvantage to be vulnerable in that seeds or straw particles and the like, which may distort the mechanism, may relatively easily be collected therein. It also has for a disadvantage that a cover, which may be applied for protection against such particles, should be sturdy enough to resist e.g. the impact of a bag of seed which may come into contact therewith at filling the hopper, in which the distributing mechanism is usually located. The known construction is furthermore disadvantageous in that it does not allow the distributor head to be modified easily for drilling different crops. For the latter purpose it is in practice known to exchange at least part of the top cover of the distributor head, thus changing the used number of outlets. The latter easily allows to e.g. double the row distance as required when changing from drilling cereals to drilling green peas.

It is the object of the invention to overcome such disadvantages in a favourable manner. According to the invention, this is realised when said motion is a rotational motion about a part of, or about an extension of the supply tube, or an axial motion along said part of, or along said extension of the supply tube, and that the control means and the intervention means are located below the drum-shaped distributor member.

In an advantageous embodiment of the machine according to the invention, the distributor member is part of a distribution implement of a pneumatic sowing machine comprising the vertical supply tube which in the upward direction leads to the distributor member, and feedthrough lines which at least through some distance are of a flexible construction and are connected via one end to seed pipes which optionally have coulters. The distribution implement may include the intervention means and the control means, with the aid of which the distribution implement is adjustable, whilst the same components forming part of the implement are used, to a first mode of usage in which a number of discharge channels, after having been operated, are closed for any feedthrough, and to a second mode of usage in which, after operation, a further aperture in the discharge channels is released for bypassing of the seed, more in particular for feedback to the hopper. In a first specific design the discharge channel is provided in a wall, for the accommodation of a flap, with supporting means for supporting a pivot shaft, which extends transversely to the seed flow, of the flap. In a second specific design, the flap has at least predominantly the shape of a disc portion, of which the round peripheral part is interrupted by a flat peripheral part.

For a better understanding of the invention and to show how the same may be carried into effect, reference will now be made, by way of example, to the accompanying drawings, in which:
Figure 1 is a side view of a machine in accordance with the invention, coupled to the lifting hitch of a tractor;
Figure 2 is a view taken in the direction of the arrow II in Figure 1, part of this view having been omitted;
Figure 3 is a view taken in the direction of the arrow III in Figure 2;
Figure 4 is a partly cut-away view taken in the direction of the arrow IV in Figure 1;
Figure 5 is a view taken on the line V-V in Figure 4;
Figure 6 is a plan view taken in the direction of the arrow VI in Figure 4;
Figure 7 is a partly cut-away view taken on the line VII-VII in Figure 6;
Figure 8 is a view in accordance with Figure 7 of likewise a portion of Figure 6;
Figure 9 is a further detailed illustration of a portion of the view in accordance with Figure 8;
Figure 10 is a view taken in the direction of the arrow X in Figure 9;
Figure 11 is a first alternative embodiment of a portion of the invention, shown in a view in accordance with Figure 4;
Figure 12 is a second alternative embodiment of a portion of the invention, shown in a view in accordance with Figure 4;
Figure 13 is a third alternative embodiment of a portion of the invention, shown in a view in accordance with Figure 4;
Figure 14 shows a first position of the construction in accordance with Figure 13;
Figure 15 shows a second position of the construction in accordance with Figure 13;
Figure 16 is a side view in accordance with Figure 4 of a fourth alternative embodiment of a portion of the invention, and
Figure 17 is a plan view of Figure 16.

Corresponding components in the drawings have been given the same reference numerals. In addition, the invention is in no way limited to the embodiments shown and described here. They only serve by way of illustration of the inventive idea.

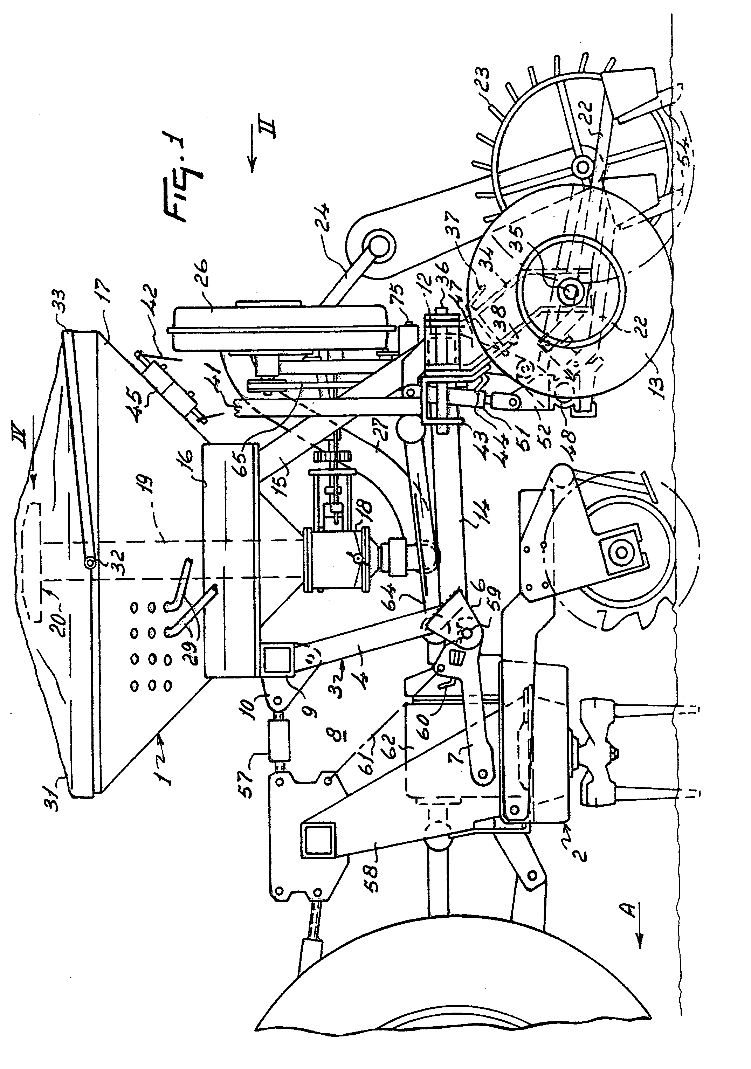

Figure 1 shows a sowing machine 1 which via a known per se three-point coupling is connected to a driven soil cultivating machine 2, in the present embodiment an equally known per se p.t.o.-driven rotary harrow. The soil cultivating machine itself is incorporated in the three-point lifting hitch of a tractor. The sowing machine 1 includes a frame 3 with frame beams which more or less define a cube. The two front pillars 4 of this frame are equipped near their lower sides with lugs 6 which also are part of the coupling means for coupling the sowing machine 1 to the lower arms 7 of a three-point lifting device 8 of the soil cultivating machine 2. Near their upper sides, the pillars 4 support a carrier 9 which extends transversely to the direction of travel and, near its midway point, has upper lugs 10, which also serve for coupling to the three-point lifting device 8. The lugs 10 are located halfway between the two lower coupling lugs 6. Near its rear side, the frame 3 includes a rear frame beam 12 which extends through the working width of the machine and transversely to the direction of operative travel A and at the ends of which a support wheel 13 for the sowing machine 1 is arranged. The rear frame beam 12 is connected to the front carrier 9 via two frame beams 14 which extend predominantly horizontally and in the direction of operative travel A and each connect up with a front pillar 4, and via two rear, predominantly upwardly extending pillars 15, which near their upper ends are interconnected by means of two girders 16 which likewise extend predominantly horizontally and in the direction of operative travel and bear on the carrier 9. The girders 16 are made of profiled plate material and have a plane extending obliquely downwardly to the midway point of the machine, on which plane a hopper 17 in the shape of an upside down pyramid bears. The hopper 17 ends in a dosing member 18 which, depending on the rate of travel, supplies seed material to a feedthrough system which feeds seed via a rise pipe 19 leading to a distributor implement 20 to seed delivery pipes 22. For that purpose, the dosing member 18 is in driving connection in a known per se manner via a drive rod 24 with a soil-driven stepping wheel 23. The seed feedthrough system includes an air pump or fan 26 for generating an air current, by means of which, after having been fed forward through the air feed tube 27, the dosed seed is conveyed via the at least predominantly vertically extending rise pipe 19 to the distributor implement 20 located in the top portion of the hopper 17. The distributor implement 20 comprises a plurality of discharge nozzles which determine the maximum number of operable seed delivery pipes 22, and to which flexible lines or feedthrough pipes 29 are connected. The discharge nozzles each constitute a portion of discharge channels located for the main part in the distributor implement 20. The other end of a line 29 connects the distributor implement 20 to the seed delivery pipes 22. The distributor implement 20 is accommodated under a canvas 31 of the hopper 17, which canvas, after having been pivoted about a bracket 33 which is pivotal about a pivot shaft 32, gives access to the hopper. The hopper also includes a bracket which extends transversely to the direction of operative travel and over the rear half of the distributor member 20 and serves for lifting the canvas and for protecting the distributor implement on filling of the hopper.

The wheels 13 of the sowing machine 1 are pivotal together with a predominantly downwardly extending supporting part 34, in which a shaft 35 for the wheel 13 is bearing-supported, through 180° about a pivot shaft 36 extending in the direction of operative travel A, and are lockable in that position. In the active position shown, the support 34 is locked by means of the pin 37 with respect to a supporting bracket 38 at the rear frame beam 12. The pivot shaft 36 acts at the same time as the pivot shaft for the arm 41 of a known per se marker device. At the free end of a telescopically sliding arm which in operation extends predominantly in the lateral direction and is disposed via a fork 43 on the pivot shaft 36, the marker comprises a (non-shown) marker disk. The marker arm 41 is part of a marker device. For the transport position, the marker is locked by means of a locking pin 44, which is to be inserted through an extension of a fork tooth and through the supporting bracket 38. The marker device further includes a switching device 45 which is disposed against the rearmost wall portion of the hopper 17 and is hydraulically and remotely controllable from the tractor cab and is connected to a marker via a cable 42.

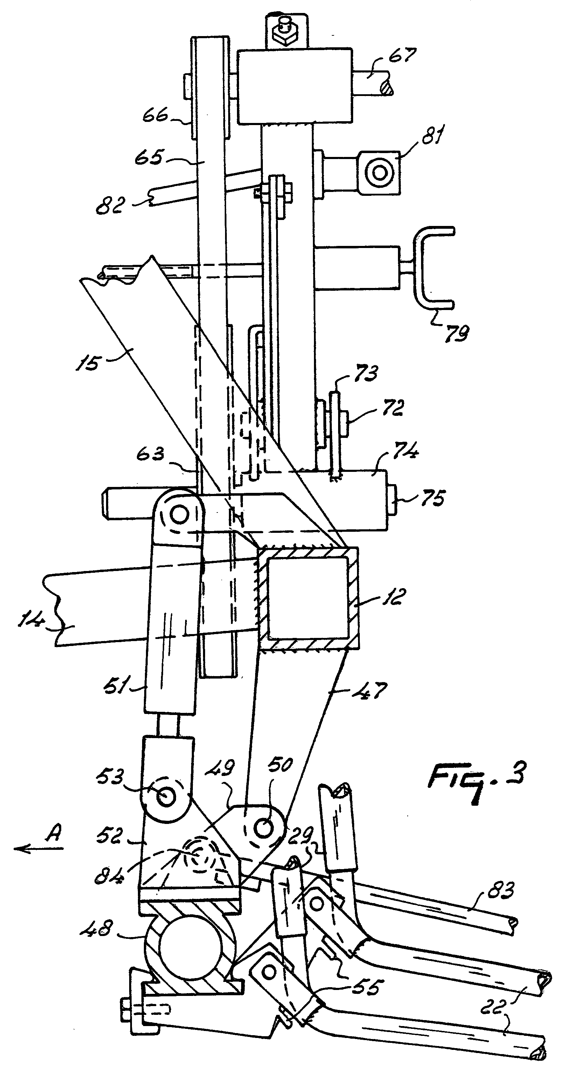

As is shown in Figure 3, two supports 47 extend from the bottom side of the rear frame beam 12 in a downward direction for the purpose of suspending therefrom a carrier 48 for seed pipes 22, which carrier extends horizontally and transversely to the direction of operative travel A. The carrier 48 is connected so as to be capable of pivoting about a pivot shaft 50 located transversely to the direction of operative travel, via upwardly extending supports 49, to supports 47 on the frame beam 12. The position of the known per se carrier 48 can be adjusted with the aid of a control element 51, which in the present embodiment is a hydraulic member which is connected so as to be capable of pivoting about a shaft 53 to a supporting bracket 52 disposed on the carrier 48. In a side view, the pivot shaft 53 extends at some distance from the pivot shaft 50. In the retracted state of the control element 51, the seed coulters attached at the end of the seed pipes 22 are in a state in which they are pushed into the seed bed against an adjustable tension of a (non-shown) spring. In the extended state of the control element 51, the seed pipes 22 are lifted to a height of more than 25 cms above the seed bed with the aid of a stop 55 which abuts against the bottom side of the respective seed pipes 22.

The coupling device 8, by means of which the sowing machine 1 is connected to the p.t.o-driven rotary harrow 2, comprises, taken in a side view, a four-bar linkage with a top rod 57 constituted by a screw spindle, and two lower lifting arms 7 which near their leading ends are connected to the three-point trestle 58 of the soil cultivating machine 2 and which, near the trailing ends are couplable to a pivot shaft which is inserted through the lower lugs 6 of the sowing machine 1. To that end, the arms 7 include a claw which can be locked by means of a spring-loaded locking pin 60 which is movable transversely to the pivot shaft. In operation, the downward motion of the four-bar linkage is limited by the flexible connecting elements 61 constituted by chains, which extend from the upper side of the mounting trestle 58 to each of the two lower lifting arms 7. During transport, the chains form a limitation against downward motion of the sowing machine 1 with respect to the soil cultivating machine 2.

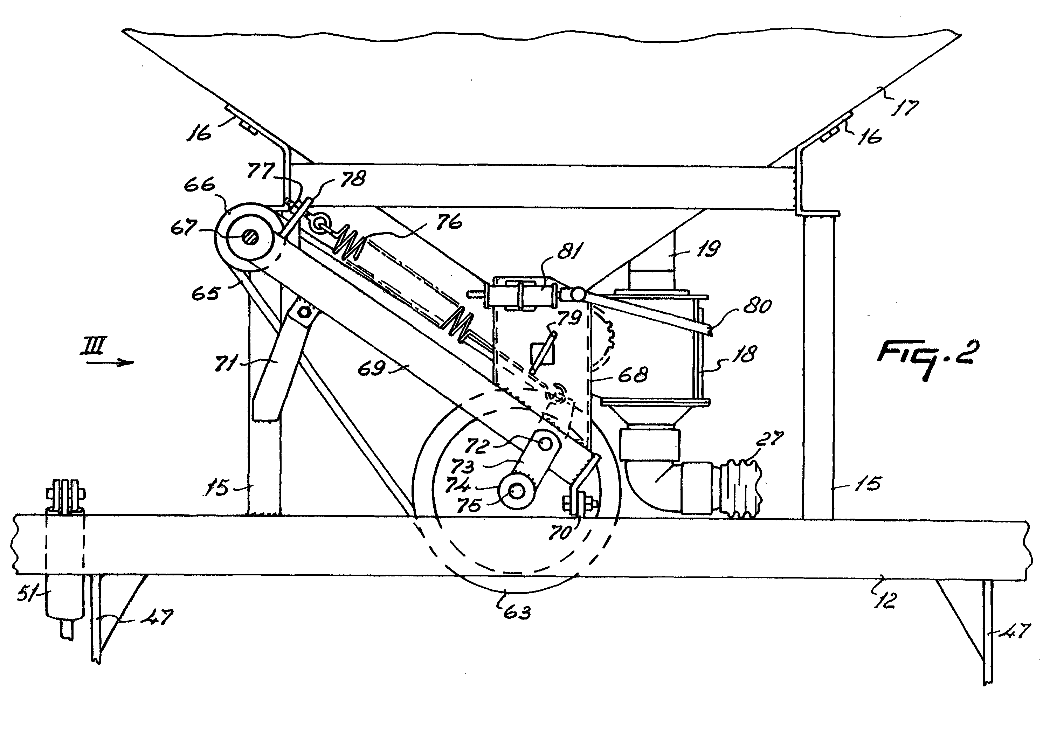

A coupling shaft 64 extends between the outgoing shaft of a gear box 62 located on the soil cultivating machine 2 and a first drive wheel 63, arranged near the midway point of the rear frame beam 12, for a belt transmission. As is shown in Figure 2, the first, relatively large drive wheel 63 is in connection via a drive belt 65 constituted by a V-belt with a second drive wheel 66 which has about half as large a diameter. This drive wheel 66 is disposed on an extension of the rotary shaft 67 for the (non-shown) direct drive of a fan 26. Both drive wheels 63, 66 are supported with respect to a carrier 69 of a fan device, which comprises the said drive wheels 63, 66 and the component parts enumerated hereinafter. The carrier 69, which in the present embodiment is a hollow, square beam, is detachably bolted by means of its one end located near the midway point of the machine to a lug 70 disposed on the rear frame beam 12, and is likewise detachably bolted near its other, laterally located end to a supporting bracket 71 which extends upwardly from a rear pillar 15. Near its end located near the midway point of the machine, the carrier 69 is fitted with a pivot shaft 72 which extends in the direction of operative travel A and around which a lever 73, which has two arm portions which extend along a leading and a trailing side of the carrier 69, is movable. In the present embodiment, the lever 73 extends approximately transversely to the longitudinal direction of the carrier 69 and via one end, located at the bottom side of the carrier 69, bears a bush 74, in which the rotary shaft 75 for the first belt wheel 63 is bearing-supported. Via its other end located above the carrier 69, the lever 73 is connected to a tension spring 76 which extends approximately transversely to the lengthwise direction of the lever 73 and consequently mainly in parallel along the carrier 69 for the fan device. The spring 76 has its other end hooked into an eye element which with the aid of a nut 77 is adjustable in the longitudinal direction of the spring 76, relative to a plate-like support 78 disposed on the carrier 69.

On the carrier 69 there is disposed an upwardly extending supporting bracket 68 which, in a horizontal cross-sectional view, has a U-shaped profile, the legs of which extend in the forward direction. Approximately in its midway point, the supporting bracket 68 has an aperture, through which an adjusting element having a handle 79 is inserted. Using the said means, the volume of the rate of travel-dependent metering of the dosing member 18 can be influenced. In that leg of the supporting bracket 68 that is located in the region of the fan 26 there is a recess, through which a straight end portion of the tension spring 76 extends. Figure 2 further shows the coupling shaft 80 which obliquely rearwardly and laterally extends towards the stepping wheel 23 and is connected to a gear box 81 having a right-angled transmission and a further drive rod 82, via which the dosing member 18 is driven.

Figure 3 shows to an enlarged scale, further to the elements already described and indicated by reference numerals in the preceding drawings, also a connecting rod 83 for the stepping wheel 23 which is connected, capably of pivoting about a pivot shaft located transversely to the direction of operative travel, to the carrier 48 of the seed pipes 22.

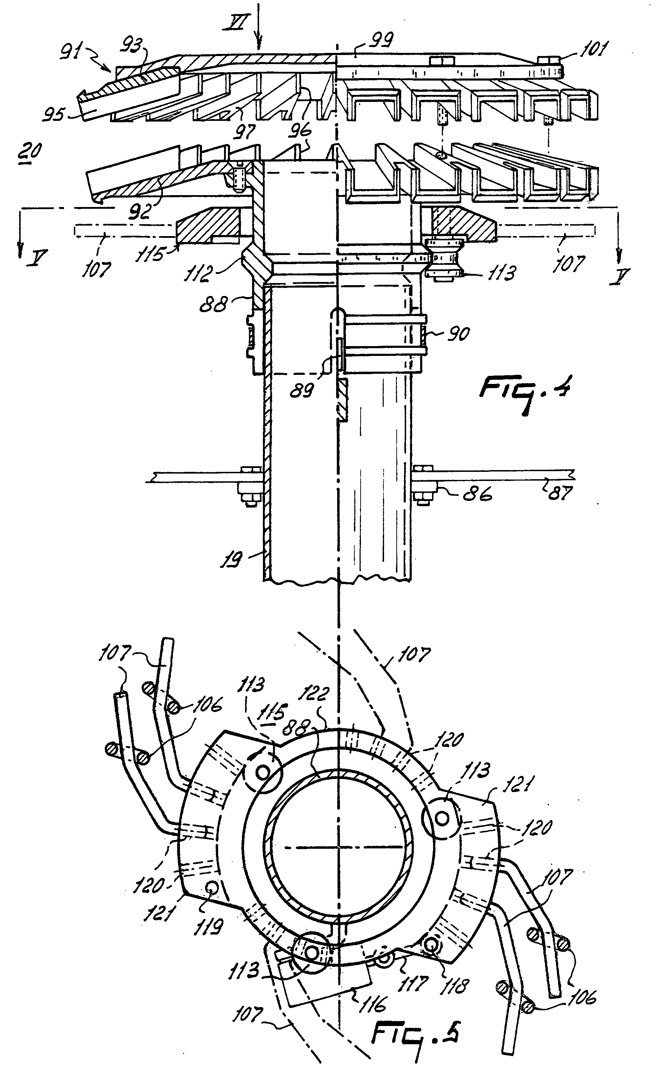

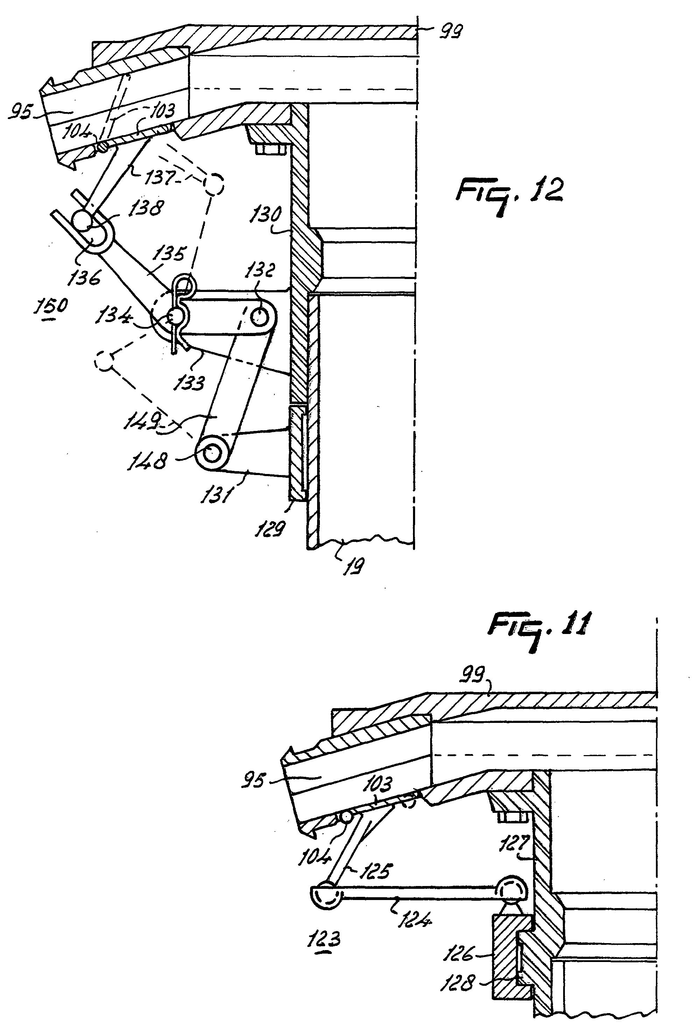

Figure 4 shows in a partly cut-way view a distributor device 20 disposed on the feed pipe, or rise pipe 19. In the present embodiment, the feed pipe 19 is supported in the hopper 17 by means of struts 87 connected to a flange 86. The distributor device 20 includes an adaptor member 88 which is disposed on the upper end of the rise pipe 19 and near its lower end is provided with recesses 89 for an effective clamping connection to a clamping bracket 90. Near its upper end, the adaptor member 88 has a flange to which a predominantly drum-shaped distributor element 91 is concentrically attached. By means of a corresponding aperture in the lower flat peripheral wall 92, the distributor element 91 is contiguous to the aperture in the adaptor member 88 and in the circular wall has apertures formed by nozzles of a feedthrough channel 95. Present between the lower and upper walls 92, 93 of the distributor element 91 are partitions which are provided in the shape of a V and extend vertically, which during operation transfer seed coming from the central aperture to the nozzles and which are part of these nozzles and the feedthrough channel 95. Two parallel extending partitions 96 form in each case, together with the under and upper walls 92, 93, the feedthrough channel 95 which partly extends into the drum-shaped distributor area and partly away therefrom in the shape of a nozzle. In the present embodiment, the partitions 96 are a component part of a predominantly V-shaped body 97 (Figure 10). The distributor element 91 is in the form of two portions 98, 99 which are bolted together with the aid of bolts 101 and are separated halfway the height of the distributor element 91. The V-shaped bodies 97 are split halfway their height into two portions which are each designed as an integral whole with the upper and lower wall 92, 93, respectively. In a further (non-shown) embodiment, the V-shaped bodies 97 are interconnected and are lockable as an individual unit between the lower wall 92 and the upper wall 93. The V-shaped bodies 97 extend centrifugally from an imaginary circle, the diameter of which covers more than twice the diameter of the supply aperture. In the present embodiment, the height of the partitions 96 equals the width of a feedthrough aperture, i.e. approximately 3 cms. A central part of the distributor element 91, which is concentrically located around the adaptor member 88 and has a diameter approximately one and a half times the diameter thereof, extends parallel to a horizontal plane, whilst an outer segment, contiguous thereto, of the lower and upper wall 92, 93 extend parallel to each other, but at an angle of approximately 15° with a horizontal line in the downward direction.

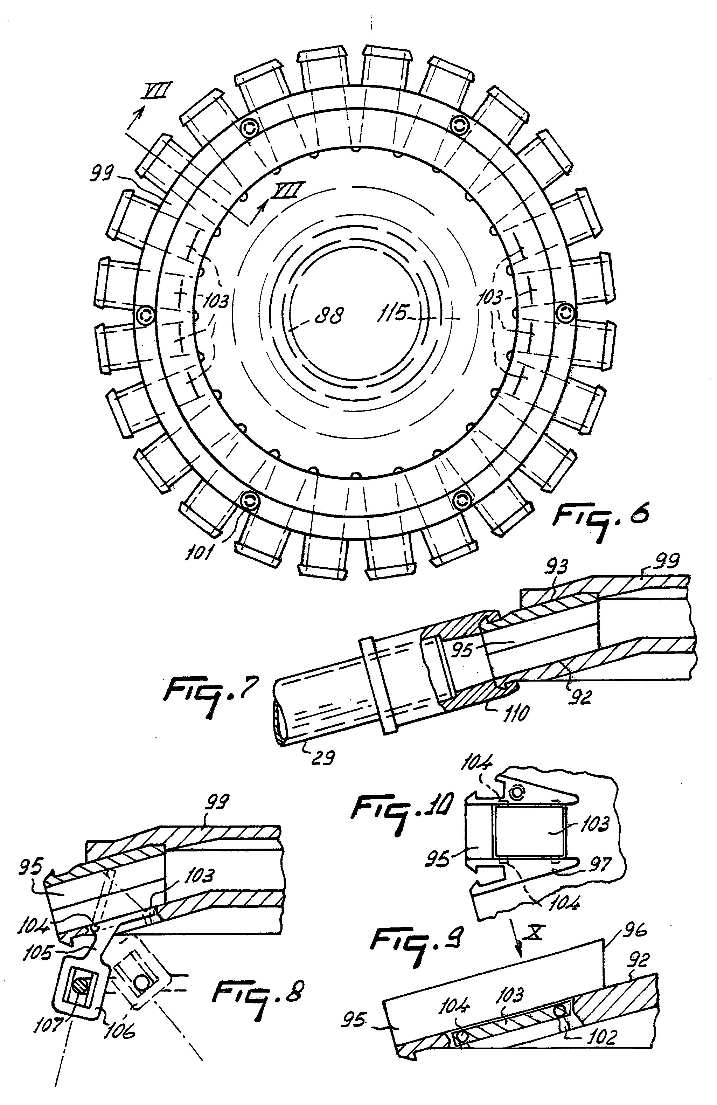

Each of the feedthrough channels 95 incorporates, fitted in a wall, in the present embodiment in the bottom wall, a flap 103 which forms part of the wall and is provided with projections 104, by means of which the flap 103 is pivotally snapped into the partly clamping apertures or seats 102, intended for that purpose, in the adjoining part of the raised walls and by means of which the flap 103 is pivotal with respect to the relevant wall in which it is accommodated. The flap 103 always extends, in accordance with the invention, through the width or the height of a feedthrough channel 95, in such a manner that after having been pivoted, the flap 103 can act as a means for closing the feedthrough channel 95. As is shown in Figure 8, attached to a flap 103 there is a lever 105 which in the present embodiment has an eye 106, through which an operating arm 107 of an automatic adjusting member 116 is inserted. As is shown in Figure 9, the flap 103 has at its free end a bevelled end grain section, in such a manner that the upper surface area of the flap is as a result thereof larger than the surface area of the lower side. That portion in the side wall of a discharge nozzle that is contiguous thereto extends parallel therewith.

As can be seen in Figure 7, each discharge nozzle 95 has near its end an edge, behind which a flexible, in the present embodiment a rubber, adapter member 110 can be hooked. The adapter member 110 has a bore which at that one end that is to be hooked to a discharge nozzle is square and towards the most outward end gradually becomes round, so that a flexible line 29 connected to seed pipes 22 which optionally comprise seed coulters, fits in this adapter member.

Figure 4 further shows that the adapter member 88 at the end of the supply tube 19 is fitted with a circular guide 112 constituted by a projection which in a cross-sectional view is predominantly trapezoidal. Freely rotatable supporting rollers 113 which are connected to a control body 115, which surrounds the adapter member 88 and the supply tube 19 and is predominantly annular, bear on the guide 112. Arms 107 for operating a lever 105 attached to a flap 103 are secured in the control body 115.

Figure 5 shows the control body 115 in a plan view. It bears via three supporting rollers 113 on the adapter member 88. Near the bottom side of the adapter member 88, an electromagnetic adjusting element 116 is clamped together with the clamping bracket 90. A drive rod 117 thereof is connected to the control body 115 via an upwardly extending pivot shaft 118 which extends parallel to the adapter member 88. The control body 115 has a second aperture 119 which is likewise suitable for accommodating the shaft 118. The control body 115 includes two groups of horizontally and radially directed bores 120, in which the arms 107, which at their interior ends are provided with thread, are secured with the aid of a nut. The first group comprises two facing numbers of bores 120 which are made in a radially outwardly extending portion 121 of the control body 115. The other group of bores 120 likewise comprises two facing numbers of bores. The latter bores extend at an angle of 105° with respect to the bores of the other group in an edge 122 of the control body 115. The imaginary circular lines through the centres of the bores 120 of both groups are spaced apart by some centimetres. A first portion of a control arm 107 extends, taken in the plan view of Figure 5, from the control body 115 at an angle of approximately 52° relative to the centre line of the relevant bore, and has a second portion which is arranged at an angle of 20° with the first portion. The eye 106 of a lever 105 is, in the opened state of the flap 103, located in the bend between the said first and second portion of a control arm 107.

The mode of operation of the machine in accordance with the invention will be described in greater detail hereinafter.

During operation of the sowing machine 1, it is preferably coupled to the rear three-point coupling device 8 of a p.t.o-driven rotary harrow. Compared to the possibility in which the sowing machine is coupled to the lifting hitch of a tractor, such a combination has the advantage that there is no need for the tractor to drive over a prepared seed bed. In this mode of operation, the drive of the sowing machine is preferably realized by coupling the coupling shaft 64 to a rearwardly outgoing stub axle of a gear box 62, which is coupled to the power take-off shaft of a tractor, of the p.t.o-driven rotary harrow. A direct coupling of the take-off shaft 64, e.g. when the sowing machine is coupled to a nondriven implement for secondary soil cultivation, is also possible, using an extension. The coupling shaft 64 drives the drive wheel 63, taken in a direction shown in the rear view of Figure 2, in the clock-wise direction. Due to the resistance to which the drive of mainly the fan 26 is subjected by the drive belt 65, the bearing-supported shaft 75 has a tendency to revolve whilst the lever 73 pivots about its shaft 72, around the V-belt 65, towards the smaller drive wheel 66. Via the lever 73, this produces a moment which is compensated at the other end of the lever 73 by the tension spring 76. The spring 76 is supported so as to be capable of being adjusted relative to the carrier 69 with the aid of the nut 77. Using the nut 77 and the spring 76, the drive belt 65 can be stretched sufficiently tightly around the drive wheels 66 and 63 and any wear or elongation of the belt can be compensated. The fan 26 sucks ambient air and forces it under pressure via the supply tube 27 to the dosing member 18, in which continuously adapted quantities of seed are introduced into the air flow. The air flow continues via the predominantly vertically extending rise pipe 19 to a distributor member 20. In the path of the rise pipe, which is approximately one meter high, a more or less uniform distribution of the dosed seed is effected in the air flow under the action of the gravity and the shape properties of the individual seed grains. This forms the basis for a uniform metering of the seed to the individual seed pipes in the distributor member 20. In the distributor member 20, the direction of the air flow and the seed grains contained therein is deflected in radial directions by the upper wall 99, which forms the beginning of a distribution of the aforementioned seed or seed-air flow into a plurality of seed flows. Further guidance and distribution of the air and seed flow are obtained by means of partitions which are arranged in the shape of a V near the periphery of the drum-shaped distributor member and, in the present embodiment, are part of a V-shaped body 97. In the present embodiment, the seed flow is distributed over 2 twenty-four feedthrough channels for a like number of seed pipes 22 which are equally distributed with a mutual spacing of 12.5 centimetres through the working width of three metres. Other numbers of feedthrough channels are alternatively possible, optionally accompanied by a change of the peripheral magnitude of the distributor member. In two or more of the discharge channels, to each of which a feedthrough line 29 is connected which leads to a seed pipe 22 positioned within the wheel range of the tractor wheels, there is disposed a flap 103. The flap 103 therefore constitutes an intervention means for intervening in the seed flow of the relevant feedthrough channel. Operating the flap 103 has the effect that a feedthrough of seed through the feedthrough channel 95 to a seed pipe is rendered impossible. By locking the flap 103 in that recess or seat 102 furthest from the supply pipe 19, for the shaft 104 of the flap, an aperture in the bottom of the relevant feedthrough channel is released after operation of the flap. This causes the seed and air flow assigned to the relevant feedthrough channel to be transferred from the distributor member 20. In the present embodiment, this seed is collected in the hopper 17. Such a construction has the advantage that the flow pattern in the distributor member 20 experiences hardly any change due to operation of the flap 103. Placing the flap with its pivot shaft into the key-hole shaped aperture 102 located nearest to the rise pipe has for its effect that, after flap operation, absolutely no feedthrough in the feedthrough channel is possible. If the seed and air supply to the distributor member 20 remains unchanged, the seed which otherwise would be assigned to the relevant closed feedthrough channel is now transferred to the remaining feedthrough channels. In this situation, the major portion arrives in the immediately adjacent feedthrough channels and thus extra seed is deposited in the plant rows next to the blank wheel track. Because of the fan-out of the plants sprouting next to a wheel track, it is possible to maintain a closed roof of foliage over the wheel track, which is advantageous for the optimum reception of sun light, whilst yet in the wheel track there is no row of plants, which would be crushed by the tractor wheels, as these wheels are fitted at their leading side with guide members which push the foliage aside and guide it along the wheel. An advantage of the construction now invented is therefore also that a farmer, depending on his preference, or in accordance with the requirements set by the relevant crop, can apply both sowing methods with the same machine.

The above-described interruption in the throughflow in a feedthrough channel for the benefit of "tramlines" in the field is, during operation, alternatingly applied or not applied for each track. Providing "tramlines" or not for a tractor for each sowing strip is automatically controlled with the aid of a known per se programmable electronic control unit, which is not described here in further detail, via which the adjusting element 116 is actuated automatically or by the intervention of the remote tractor driver, as the case may be.

After activation of the adjusting element 116, the drive rod 117 is driven in the clock-wise direction, seen in the plan view of Figure 5, but against internal spring action. This causes the control body 115, and consequently the arms 107 to rotate in the same direction, thereby operating the end 106 of a lever 105 with an inwardly and radially directed force component. The inward motion of the adjusting element 116 is ultimately counteracted by the stop of the flaps 103 against the upper wall of the distributor member 20, or the respective feedthrough channels, as the case may be. On operating the control body 115, this body moves in a horizontal plane by means of the supporting rollers 113 along the edge 112, provided for the purpose, of the distributor member 20. For using the distributor member 20 in the manner in which a feedthrough channel is completely sealed, the flaps 103 must be pushed from their seats 102 and thereafter be fitted by means of their pivot shaft in the seat 102 located nearest to the supply pipe 19. As a result thereof, the end 106 of a lever 105 is also moved to a position closer to the supply pipe 19. After the pivot shaft 118 has been detached, the control body 115 must be rotated through approximately 70° in the anti-clockwise direction, until the bend provided in the control arms 107 arrives in a position in which it comes to lie in the eye 106. Thereafter the pivot shaft 118 is locked again in an aperture, not further shown, in the control body 115. Thereafter activation of the adjusting element 116 has for its effect that the control body 115 with the control arms 107 is also rotated in the clock-wise direction, so that the eye 106 of the levers 105 are moved outwardly by an outwardly directed radial force component and the flaps 103 close the relevant feedthrough channels in the distributor member. The number of flaps operated per "tramline" may optionally be one or a larger number, usually not more than two at a maximum. If so desired, all the feedthrough channels in the distributor member 20 can be made suitable for accommodating a flap 103. The bottom aperture in those feedthrough channels that are not fitted with a flap can then be closed, using a plate resembling a flap, which at both ends is provided with projections 104, so that such a plate can be secured in such a manner that it closes the bottom aperture and is immovably fixed in the seats 102.

Figure 11 illustrates, in a partial view of a distributor member 123, an alternative embodiment for operating a flap 103 in a nozzle 95. In this embodiment, a control arm 124 is of a straight design and is connected near its ends via a ball-and-socket joint to an adapted lever 125 or a control body 126, respectively. In this embodiment, the control body 126 directly bears on an adapter member 127 via a groove in the inner circumference which fits around a circular guide 128 at the adapter member 127. The control body 126 then consists, seen in a plan view, of two halves which are fastened together by means of screws and are detachable.

Figure 12 shows a distributor member 150 in an embodiment in which a control body can be moved in a vertical direction along the rise pipe 19. A (non-shown) control element, which acts on a control body 129 and extends in the longitudinal direction of the supply tube 19, is connected for that purpose to the adapter member 130. In this embodiment, the control body 129 includes radially extending projections 131, near the ends of which a tangentially and horizontally extending shaft 148 is attached. In addition, the adapter member 130 includes fixed plate-shaped supports, at the ends of which, approximately below a flap 103, there are provided for a lever 135 pivot shafts 134 which extend horizontally and tangentially relative to the adapter member 130. The lever 135 comprises two arm portions which, in the present embodiment, are at an angle of approximately 135° to each other. That end thereof that acts on the lever 137 of a flap 103 has a slot 136, in which a shaft 138 attached to the end of the lever 137 extends. Via an intermediate rod 149, which is pivotally connected at its both ends, the other end of the lever 135 is in connection with a radially extending projection 131 at a control body 129. As in the previous embodiment, the control body can be moved up and down with the aid of an adjusting element which acts in the vertical direction and is remotely controllable, such as an adjusting cylinder or an electromagnet. The broken lines in Figure 12 illustrate a second possible position of the flap 103 and the lever 135. In this position, the discharge nozzle 95, after activation of the adjusting element, is closed for feedthrough by the flap 103.

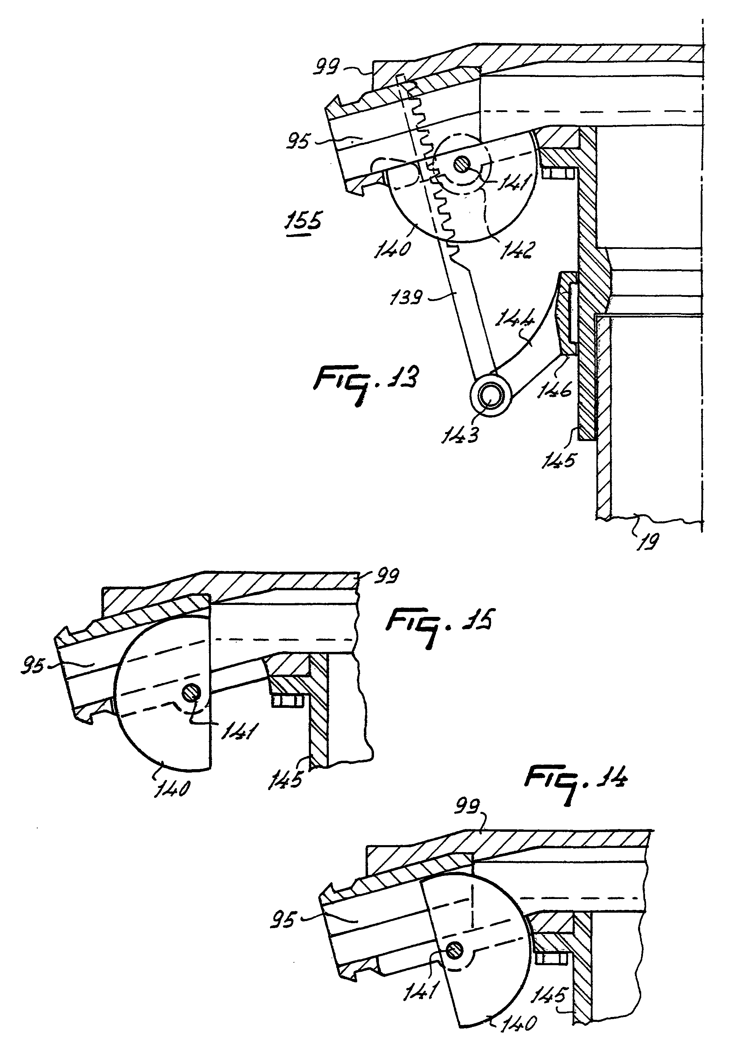

Figure 13 schematically illustrates a distributor member 155 in a construction wherein an otherwise likewise alternatively implemented flap 140 is operated with the aid of a toothed rack 139, which acts on a gearwheel 142 disposed on the pivot shaft 141 of a flap 140. The gearwheel 142 is disposed on the shaft 141 parallel to and adjoining a vertical exterior side of a discharge nozzle 95. The toothed rack 139 is connected via a pivot shaft 143 extending parallel to the pivot shaft 141 of the flap 140 to a control arm 144 of a control body 146 that is movable in the longitudinal direction of the supply tube 19 and of the adapter member 145. Near the flap 140, against the outer wall of the nozzle 95 and behind the toothed rack 139 there is provided a projection which supports the toothed rack 139 by means of a rounded-off back portion which extends parallel to the pivot shaft 141 of the flap. The teeth of the toothed rack 139 and the gearwheel 142 have such a clearance that the change in angle, to which the toothed rack is submitted in operation, can be compensated for.

Figure 13 further shows an alternative construction of the flap 140 in a discharge channel with nozzle 95. The alternative flap 140 is constructed as a disk portion which is flattened in a direction transversely to the pivot shaft 141 of the flap 140. In an opened state of the flap, the flattened portion forms part of a wall of the discharge channel, in the present case the bottom wall thereof. The pivot shaft of the flap is arranged in the region of the midway point of the flattened portion. The radius of the disk portion is preferably approximately equal to the height between the shaft 141 and the upper wall of the discharge channel.

Figure 14 shows a first closed position of the alternative flap 140, the flap 140 facing the midway point in the distributor member by means of a portion of its circular disk circumference. In this situation, the relevant feedthrough channel is closed for any feedthrough or bypass.

Figure 15 shows a second closed position of the alternative flap 140, which position, as in the first closed position, can be attained from the open state of the flap shown in Figure 13. In this position, the flat circumference of the disk portion faces the supply aperture in the adapter member 145. As a result thereof, a portion of the bottom in the discharge nozzle, located between the flap 140 and the adapter member 145, is open and, in operation, the seed fed to the relevant nozzle 95 is returned to the hopper 17.

Hereafter the mode of operation of the embodiments shown in Figures 11 to 15 is described in greater detail.

To operate the flap 103 in the construction in accordance with Figure 11, a (non-shown) adjusting element 116 also acts on the control body 126 and moves same in a clock-wise direction about the adapter member 127 and along the guiding edge 128. This motion is transferred in a pulling mode by the control arms 124 to the lever 125. To realize the mode of usage in which the distributor member is fully sealed, a flap 103 must be pushed from its seat and the connection between the control body 126 and the adjusting element 116 must be uncoupled; thereafter, after rotation of the flap 103 in the cup of the control arm 124 and after rotation of the control body 126 about the adapter member 127, the flaps 103 can be secured in the opposite seat. Before being coupled again to the control body 126, the adjusting element 116 is connected, after having been inverted, to the adapter member 127 in such a manner that, after having been activated, it causes the control body 126, taken in a plan view, to rotate in the anti-clockwise direction instead of in the clock-wise direction. Then, the flaps 103 are operated by a pushing force transferred via the control arms 124.

Reversing the mode of usage of the distributor member as shown in Figure 12 is effected in a more or less similar manner after the lever 135 of the pivot shafts 134 and 132 has been removed and after it has fitted again, after having been inverted, in accordance with the broken lines in Figure 12. A (non-shown) adjusting element 116, which also acts on the control body 129, need not be reversed in this construction. Depending on the direction in which the chosen type of adjusting element is active after activation, it can be connected in its position below or above the control body 129 either to the adapter member 130 or to the rise pipe 19. In an advantageous embodiment, the adapter member 130 extends that far downwardly that both the control body 129 and the associated adjusting element may be fastened thereon. In the construction shown in Figure 13, the control body 146 can be operated by means of an adjusting element which is movable from a 0-position in two opposite directions, but also via a simple electromagnet which, depending on the desired use of the distributor member of Figure 13, can be disposed above or below the control body, as the case may be. In the present embodiment, the adjusting element is connected via a horizontal and tangential pivot shaft to the control body 146 and is lockable by means of a snap connection system against the adapter member. Acting thus, it is simple to change the mode of usage of the distributor member by detaching the adjusting element from e.g. a position under the control body 146 and pivoting same about the horizontal and tangential pivot shaft to a snapped-on position above the control body 146. In this (non-shown) constructional provision, there is attached, seen from the horizontal and tangential pivot shaft, in the vertical and lengthwise direction of the adjusting element beyond the snap connection elements and in the region of the end of an adjusting member a radially extending support to the adapter member 145, against which the adjusting element can push itself off after having been snapped-on.

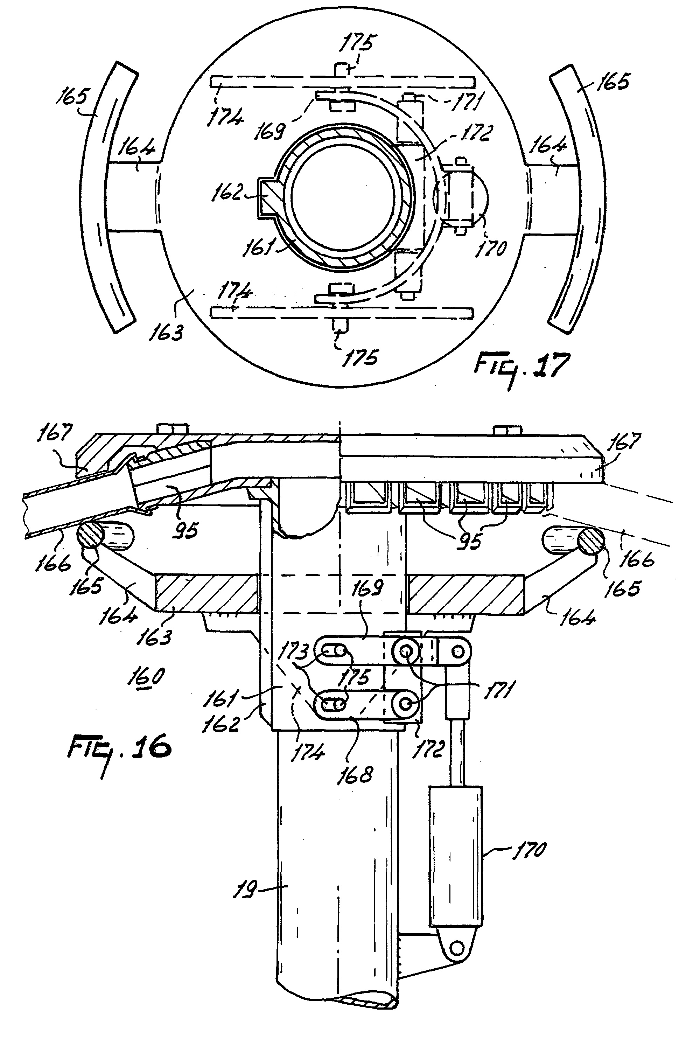

Figures 16 and 17 show an embodiment of a distributor member 160 in accordance with the invention, in which the intervention means are constituted by a pressure member 165, which closes a flexible portion 166 of a feedthrough channel 95 by pushing it against a detaining member 167. To that end, the construction includes an adapter member 161, on which extends a predominantly vertically extending guide 162, or splined guide, for a central control body 163. Pressure members 165 are supported on the control body 163 via supports 164. Against the bottom side of the control body 163 there are disposed predominantly vertically extending plate-like supports 174, which have stub axles 175 which, relative to the rise pipe 19, predominantly extend in the radial direction and are located one above the other. On the stub axles 175 there are acting parallelogram arms 168 and 169 which, with respect to the adapter member 161, bear around pivot shafts 171. The pivot shafts 171 extend parallel to the stub axle 175 and are passed through a supporting member 172 connected to the adapter member 161. The upper parallelogram arm 169 forms part of a fork-like element which surrounds the adapter member 161 approximately halfway and, near its midway point, is pivotally connected to the end of a portion of the adjusting element 170, constituted in the present construction by an adjusting cylinder. In the present construction, the adjusting element 170 itself is pivotally supported relative to the supply tube 19, but in a more advantageous construction may also be supported with respect to the adapter member 161. Near those ends which are in contact with the stub axles 175, the parallelogram arms 168 and 169 are provided with a slotted hole 173. On activation of the adjusting element 170, the fork-like element acts together with the arm portions 169 as a lever. In the present embodiment, to the flexible intermediate member 166 there are connected the above-described lines leading to seed pipes 22. Direct connection of the lines 29 to the rigid portion of a feedthrough channel 95 is, however, alternatively possible when the lines 29 are made from suitable, i.e. adequately strong and flexible, material. The detaining body 167 is, in the present embodiment, part of the upper lid of a distributor member but, together with the bolts which connect the upper wall and the lower wall of a distributor member, may likewise be accommodated as a separate component part.

In a further advantageous embodiment, which is not further shown in Figure 16, the pressure member 165 fully encompasses the adapter member 161 and end pieces can be attached only in the region of the feedthrough channels which optionally must be closable. Then, those portions of the pressure body 165 which are not fitted with an end piece do not act on the feedthrough channels 95 after the adjusting element 170 has been activated. It is, of course, necessary to perform a dimensional correction in the construction, compared to the construction shown in the drawing, e.g. by positioning the supporting member 172 together with the adjusting member 170 at a somewhat lower position. In a still further advantageous embodiment in accordance with the invention, which is not further shown in Figure 16, the plate-like control body 163 can be fitted in the region of one or more feedthrough channels 95 with vertically extending plates which are each inserted as a slide into the bottom of the relevant feedthrough channel, which is provided with a narrow recess for the purpose. In an advantageous embodiment, these plates are disposed near the start of the feedthrough channel, so that, after the relevant feedthrough channel has been closed, no seed can accumulate. In a still further advantageous embodiment, these slides, seen in a plan view, are in the shape of a V, so that the seed originally intended for the relevant feedthrough channel 95 is distributed to an improved extent over the two adjoining feedthrough channels. According to the invention, it is furthermore also possible to form combinations of elements from the various embodiments, such as e.g. the use of the parallelogram construction in, for example, the embodiment shown in Figure 13.

## Claims

1. A sowing machine comprising a hopper (17), from which, via a predominantly drum-shaped distributor member (20, 123, 150, 155, 160) with a supply tube (19) and discharge channels (95), seed can be distributed into a plurality of seed flows, the distributor member including intervention means (103, 140, 165, 166) for intervening in a seed flow and control means (105, 106, 107, 115, 124, 125, 126, 129, 135, 137, 138, 145, 146, 149, 139, 163, 164, 168, 169) acting on said intervention means (103, 140, 165, 166), the control means (105, 106, 107, 115, 124, 125, 126, 129, 135, 137, 138, 145, 146, 149, 139, 163, 164, 168, 169) comprising a central adjusting element (116, 170) and a control body (115, 126, 129, 146, 163) positioned intermediary between the adjusting element (116, 170) and the intervention means, the control body (115, 126, 129, 146, 163) being predominantly ring-shaped and arranged to be capable of motion, **characterized in that** said motion is a rotational motion about a part of, or about an extension (88) of the supply tube (19), or an axial motion along said part of, or along said extension of the supply tube, and that the control means (105, 106, 107, 115, 124, 125, 126, 129, 135, 137, 138, 145, 146, 149, 139, 163, 164, 168, 169) and the intervention means (103, 140, 165, 166) are located below the drum-shaped distributor member (20, 123, 150, 155, 160).

2. A sowing machine as claimed in claim 1, **characterized in that** the distributor member (20, 123, 150, 155, 160) is part of a distribution implement of a pneumatic sowing machine comprising the vertical supply tube (19) which in the upward direction leads to the distributor member (20), and feedthrough lines (29) which at least through some distance are of a flexible construction and are connected via one end to seed pipes (22) which optionally have coulters.

3. A sowing machine as claimed in claim 1 or 2, **characterized in that** the control means include a flap (103, 140, 166) accommodated in the discharge channel (95).

4. A sowing machine as claimed in claim 3, **characterized in that** the flap (103, 140, 166) forms in a starting position also a wall of the discharge channel (95) which, in a cross-sectional view, is rectangular.

5. A sowing machine as claimed in claim 3 or 4, **characterized in that** the flap (103, 140) includes a lever (105, 125, 137, 142) which extends beyond the relevant discharge channel (95) and on which a control arm (107, 135, 124, 139) connected to the central control body (115, 126, 129, 146) acts.

6. A sowing machine as claimed in claim 5, **characterized in that** an electromagnetic adjusting element (116), which can be activated remotely and by the intermediary of an operator and/or a process computer, acts on the control body (115, 126, 129, 146) .

7. A sowing machine as claimed in claim 2, **characterized in that** the distribution implement (19, 20, 123, 150, 155, 29) includes the intervention means and the control means (102 - 107, 131 - 138, 124 - 126, 139 - 144, 163 - 169), with the aid of which the distribution implement (19, 20, 123, 150, 155, 160, 29) is adjustable to a first mode of usage in which a number of discharge channels (95), after having been operated, are closed for any feedthrough and to a second mode of usage in which, after operation, in the discharge channels a further aperture is released for bypassing the seed, more in particular for feedback to the hopper.

8. A sowing machine as claimed in one of the claims 3 - 5, **characterized in that** the discharge channel (95) is provided in a wall for the benefit of the flap (103), with supporting means (102) for supporting a pivot shaft (104), which extends transversely to the seed flow, of the flap.

9. A sowing machine as claimed in claim 8, **characterized in that** the support means (102) comprise a synthetic material holder with a key-hole-shaped aperture, into which the pivot shaft of the flap can be locked by pushing same therein.

10. A sowing machine as claimed in claim 2, **characterized in that** the distribution implement (20, 123, 150, 155, 29) can be made suitable by simply inverting the adjusting element (116) for a use in which a seed flow directed to a seed pipe (22) can be interrupted, and for a use in which it is bypassed, respectively.

11. A sowing machine as claimed in claim 3, **characterized in that** the flap (140) has at least predominantly the shape of a disc portion, the round peripheral part of which is interrupted by a flat peripheral part.

12. A sowing machine as claimed in claim 1 or 2, **characterized in that** the intervention means include pressure means (165), which can exercise a closing action on a flexible discharge channel (166) for a separate seed flow.

## Patentansprüche

1. Sämaschine mit einem Vorratsbehälter (17), aus dem über einen überwiegend trommelförmigen Verteiler (20, 123, 150, 155, 160) mit einem Zuführrohr (19) und Auslaßkanälen (95) Saatgut in eine Vielzahl von Saatgutströmen aufgeteilt werden kann, wobei der Verteiler Eingreifvorrichtungen (103, 140, 165, 166) enthält, um in einen Saatgutstrom einzugreifen, sowie Steuervorrichtungen (105, 106, 107, 115, 124, 125, 126, 129, 135, 137, 138, 145, 146, 149, 139, 163, 164, 168, 169), die auf die Eingreifvorrichtungen (103, 140, 165, 166) einwirken, wobei die Steuervorrichtungen (105, 106, 107, 115, 124, 125, 126, 129, 135, 137, 138, 145, 146, 149, 139, 163, 164, 168, 169) ein zentrales Stellglied (116, 170) und einen Steuerkörper (115, 126, 129, 146, 163) aufweisen, der zwischen dem Stellglied (116, 170) und den Eingreifvorrichtungen angeordnet ist, wobei der Steuerkörper (115, 126, 129, 146, 163) überwiegend ringförmig ausgebildet und beweglich angeordnet ist,
**dadurch gekennzeichnet, daß** die Bewegung eine Drehbewegung um einen Teil oder um eine Verlängerung (88) des Zuführrohres (19) oder eine axiale Bewegung entlang des Teiles oder entlang der Verlängerung des Zuführrohres ist, und daß die Steuervorrichtungen (105, 106, 107, 115, 124, 125, 126, 129, 135, 137, 138, 145, 146, 149, 139, 163, 164, 168, 169) und die Eingreifvorrichtungen (103, 140, 165, 166) unter dem trommelförmigen Verteiler (20, 123, 150, 155, 160) angeordnet sind.

2. Sämaschine nach Anspruch 1,
**dadurch gekennzeichnet, daß** der Verteiler (20, 123, 150, 155, 160) Teil einer zu einer pneumatischen Sämaschine gehörenden Verteilervorrichtung ist, die das vertikale Zuführrohr (19) umfaßt, das nach oben zu dem Verteiler (20) führt, sowie Durchführungsleitungen (29), die zumindest über eine gewisse Länge elastisch ausgebildet und an einem Ende mit Särohren (22) verbunden sind, die wahlweise mit Säscharen versehen sind.

3. Sämaschine nach Anspruch 1 oder 2,
**dadurch gekennzeichnet, daß** die Steuervorrichtungen eine Klappe (103, 140, 166) enthalten, die in dem Auslaßkanal (95) angeordnet ist.

4. Sämaschine nach Anspruch 3,
**dadurch gekennzeichnet, daß** die Klappe (103, 140, 166) in einer Ausgangsposition auch eine Wand des Auslaßkanals (95) bildet, der im Schnitt rechteckig ist.

5. Sämaschine nach Anspruch 3 oder 4,
**dadurch gekennzeichnet, daß** die Klappe (103, 140) einen Hebel (105, 125, 137, 142) enthält, der über den jeweiligen Auslaßkanal (95) hinausreicht, und an dem ein Steuerarm (107, 135, 124, 139) angreift, der mit dem zentralen Steuerkörper (115, 126, 129, 146) verbunden ist.

6. Sämaschine nach Anspruch 5,
**dadurch gekennzeichnet, daß** ein elektromagnetisches Stellglied (116), das aus der Ferne und mit Hilfe einer Bedienungsperson und/oder eines Prozeßrechners betätigt werden kann, auf den Steuerkörper (115, 126, 129, 146) einwirkt.

7. Sämaschine nach Anspruch 2,
**dadurch gekennzeichnet, daß** die Verteilervorrichtung (19, 20, 123, 150, 155, 29) die Eingreifvorrichtungen und die Steuervorrichtungen (102-107, 131-138, 124-126, 139-144, 163-169) enthält, mit deren Hilfe die Verteilervorrichtung (19, 20, 123, 150, 155, 160, 29) in einen ersten Betriebsmodus einstellbar ist, in dem eine Anzahl von Auslaßkanälen (95) nach ihrer Aktivierung für jeden Durchtritt geschlossen werden, und in einen zweiten Betriebsmodus, in dem in den Auslaßkanälen nach deren Aktivierung eine weitere Öffnung zum Umlenken des Saatgutes freigegeben wird, insbesondere zur Rückführung zum Vorratsbehälter.

8. Sämaschine nach einem der Ansprüche 3 bis 5,
**dadurch gekennzeichnet, daß** der Auslaßkanal (95) in einer Wand zur Unterbringung der Klappe (103) mit einer Haltevorrichtung (102) zum Halten einer sich quer zum Saatgutstrom erstreckenden Schwenkachse (104) der Klappe versehen ist.

9. Sämaschine nach Anspruch 8,
**dadurch gekennzeichnet, daß** die Haltevorrichtung (102) einen Kunststoffhalter mit einer schlüssellochförmigen Öffnung umfaßt, in der die Schwenkachse der Klappe durch Einstecken festgelegt werden kann.

10. Sämaschine nach Anspruch 2,
**dadurch gekennzeichnet, daß** die Verteilervorrichtung (20, 123, 150, 155, 29) durch einfaches Umdrehen des Stellgliedes (116) in einen Modus eingestellt werden kann, in dem ein auf ein Särohr (22) ausgerichteter Saatgutstrom unterbrochen werden kann, bzw. in einen Modus, in dem er umgelenkt wird.

11. Sämaschine nach Anspruch 3,
**dadurch gekennzeichnet, daß** die Klappe (140) zumindest überwiegend die Form eines Scheibenabschnittes hat, dessen runder Umfangsteil durch einen geraden Umfangsteil unterbrochen wird.

12. Sämaschine nach Anspruch 1 oder 2,
**dadurch gekennzeichnet, daß** die Eingreifvorrichtungen eine Druckvorrichtung (165) enthalten, die eine Schließwirkung auf einen elastischen Auslaßkanal (166) für einen getrennten Saatgutstrom ausüben kann.

## Revendications

1. Semoir comprenant une trémie (17), de laquelle, via un élément distributeur principalement en forme de tambour (20, 123, 150, 155, 160) avec un tube d'alimentation (19) et des canaux de décharge (95), des semences peuvent être distribuées dans une pluralité de flux de semences, l'élément distributeur comprenant des moyens d'intervention (103, 140, 165, 166) pour intervenir dans un flux de semences et des moyens de commande (105, 106, 107, 115, 124, 125, 126, 129, 135, 137, 138, 145, 146, 149, 139, 163, 164, 168, 169) agissant sur lesdits moyens d'intervention (103, 140, 165, 166), les moyens de commande (105, 106, 107, 115, 124, 125, 126, 129, 135, 137, 138, 145, 146, 149, 139, 163, 164, 168, 169) comprenant un élément de réglage central (116, 170) et un corps de commande (115, 126, 129, 146, 163) placé de manière intermédiaire entre l'élément de réglage (116, 170) et les moyens d'intervention, le corps de commande (115, 126, 129, 146, 163) étant principalement en forme de bague et arrangé pour pouvoir bouger, **caractérisé en ce que** ledit mouvement est un mouvement rotatif autour d'une partie de ou autour d'une extension (88) du tube d'alimentation (19) ou un mouvement axial le long de ladite partie de ou le long ladite extension du tube d'alimentation et **en ce que** les moyens de commande (105, 106, 107, 115, 124, 125, 126, 129, 135, 137, 138, 145, 146, 149, 139, 163, 164, 168, 169) et les moyens d'intervention (103, 140, 165, 166) sont situés en dessous de l'élément distributeur en forme de tambour (20, 123, 150, 155, 160).

2. Semoir selon la revendication 1, **caractérisé en ce que** l'élément distributeur (20, 123, 150, 155, 160) fait partie d'un outil de distribution d'un semoir pneumatique comprenant le tube d'alimentation vertical (19) qui, vers le haut, conduit à l'élément distributeur (20) et des conduites de passage (29) qui au moins sur une certaine distance sont d'une construction souple et sont reliées par une extrémité aux tuyaux des semences (22) qui, en option, ont des coutres.

3. Semoir selon la revendication 1 ou 2, **caractérisé en ce que** les moyens de commande comprennent un rabat (103, 140, 166) placé dans le canal de décharge (95).

4. Semoir selon la revendication 3, **caractérisé en ce que** le rabat (103, 140, 166) forme dans une position de départ également une paroi du canal de décharge (95) qui, dans une vue en coupe, est rectangulaire.

5. Semoir selon la revendication 3 ou 4, **caractérisé en ce que** le rabat (103, 140) comprend un levier (105, 125, 137, 142) qui s'étend au-delà du canal de décharge (95) pertinent et sur lequel un bras de commande (107, 135, 124, 139) relié au corps de commande central (115, 126, 129, 146, 163) agit.

6. Semoir selon la revendication 5, **caractérisé en ce qu'**un élément de réglage électromagnétique (116), qui peut être activé à distance et par l'intermédiaire d'un opérateur et/ou d'un ordinateur, agit sur le corps de commande central (115, 126, 129, 146, 163).

7. Semoir selon la revendication 2, **caractérisé en ce que** l'outil de distribution (19, 20, 123, 150, 155, 29) comprend les moyens d'intervention et les moyens de commande (102 - 107, 131 - 138, 124 - 126, 139 - 144, 163 - 169), avec l'aide desquels l'outil de distribution (19, 20, 123, 150, 155, 29) est réglable pour un premier mode d'utilisation dans lequel plusieurs canaux de décharge (95), après avoir été actionnés, sont fermés à tout passage et pour un deuxième mode d'utilisation dans lequel, après utilisation, dans les canaux de décharge une autre ouverture est libérée pour dériver les semences, plus particulièrement pour revenir vers la trémie.

8. Semoir selon l'une des revendications 3 - 5, **caractérisé en ce que** le canal de décharge (95) est prévu dans une paroi pour recevoir le rabat (103), avec des moyens de support (102) pour supporter un axe de pivot (104), qui s'étend transversalement jusqu'au flux de semence, du rabat.

9. Semoir selon la revendication 8, **caractérisé en ce que** les moyens de support (102) comprennent un support en matériau synthétique avec une ouverture en forme de serrure dans laquelle l'axe de pivot du rabat peut être verrouillé en le poussant dedans.

10. Semoir selon la revendication 2, **caractérisé en ce que** l'outil de distribution (20, 123, 150, 155, 29) peut être rendu approprié en inversant simplement l'élément de réglage (116) pour une utilisation dans laquelle un flux de semences dirigé vers un tuyau à semences (22) peut être interrompu et pour une utilisation dans laquelle il est dérivé, respectivement.

11. Semoir selon la revendication 3, **caractérisé en ce que** le rabat (103) a au moins principalement la forme d'une portion de disque, dont la partie périphérique arrondie est interrompue par une partie périphérique plate.

12. Semoir selon la revendication 1 ou 2, **caractérisé en ce que** les moyens d'intervention incluent des moyens de pression (165), qui peuvent exercer une action de fermeture sur un canal de décharge flexible (166) pour un flux de semences séparé.
